# EUROPEAN PATENT APPLICATION

(11) **EP 4 835 404 A1**
(43) Date of publication of application: **04.11.2026**
(21) Application number: 24912371.2
(22) Date of filing: 11.12.2024
(51) Int. Cl.: G01C 15/00

(54) **PROJECTION DEVICE, PROJECTION SYSTEM, AND PROJECTION METHOD**

(30) Priority: 26.12.2023 JP 2023220014
(71) Applicant: Panasonic Intellectual Property Management Co., Ltd., Kadoma-shi, Osaka 571-0057 (JP)
(72) Inventor: HAYASHI, Yuki, Kadoma-shi, Osaka 571-0057 (JP); NISHI, Tetsuya, Kadoma-shi, Osaka 571-0057 (JP)
(74) Representative: Appelt, Christian W.
(86) International application number: PCT/JP2024/043789
(87) International publication number: WO 2025/142482

(57) **Abstract**

A projection device (20) includes: a projector (23); a distance meter (22); and a controller (24) that causes the projector (23) to project drawing data onto a projection position on a projection plane (50), which is determined based on a distance and an angle of the distance meter (22) at a time of measurement of the distance. When a user selects a point on the projection plane (50), the controller (24) presents the user with a position of the point that the user intends to select by forming, on the projection plane (50), a light emission point formed based on light emitted by the distance meter (22), and emits, onto the projection plane (50), guide light indicating a position of the light emission point to the user.

## Description

### [Technical Field]

The present invention relates to a projection device, a projection system, and a projection method.

### [Background Art]

Conventionally, various techniques relating to laser range finders have been proposed. Patent Literature (PTL) 1 discloses a shape dimension measuring device capable of easily, rapidly, and accurately measuring shapes and dimensions of window frames or the like for installing fittings.

### [Citation List]

### [Patent Literature]

[PTL 1] Japanese Unexamined Patent Application Publication No. 2017-194438

### [Summary of Invention]

### [Technical Problem]

The present invention provides a projection device, a projection system, and a projection method that are capable of assisting a user in identifying a position on a projection plane to which the user intends to measure a distance.

### [Solution to Problem]

A projection device according to one aspect of the present invention includes: a projector that projects drawing data for a building onto a projection plane of the building under construction; a distance meter that measures a distance from each of three or more points on the projection plane to the projection device, the three or more points being selected by a user and not aligned in a straight line; an angle measurer that measures an angle of the distance meter at a time of measurement of the distance; and a controller that causes the projector to project the drawing data onto a projection position on the projection plane, the projection position being determined based on the distance measured and the angle of the distance meter at the time of the measurement of the distance. When the user selects each of the three or more points, the controller presents the user with a position of the point that the user intends to select by forming, on the projection plane, a light emission point formed based on light emitted by the distance meter, and emits, onto the projection plane, guide light indicating a position of the light emission point to the user.

A projection system according to one aspect of the present invention includes: the above-described projection device; and an operation device for the user to remotely operate the projection device.

A projection method according to one aspect of the present invention is a projection method executed by a projection device. In the projection method, drawing data for a building is projected onto a projection plane of the building under construction. The projection method includes: measuring a distance from each of three or more points on the projection plane to the projection device using a distance meter included in the projection device, the three or more points being selected by a user and not aligned in a straight line; measuring an angle of the distance meter at a time of measurement of the distance; and projecting the drawing data onto a projection position on the projection plane, the projection position being determined based on the distance measured and the angle of the distance meter at the time of the measurement of the distance. In the measuring of the distance, when the user selects each of the three or more points, a position of the point that the user intends to select is presented to the user by forming a light emission point on the projection plane, and guide light indicating a position of the light emission point to the user is emitted onto the projection plane.

### [Advantageous Effects of Invention]

The projection device, the projection system, and the projection method according to the present invention are capable of assisting a user in identifying a position on a projection plane to which the user intends to measure a distance.

### [Brief Description of Drawings]

[FIG. 1]

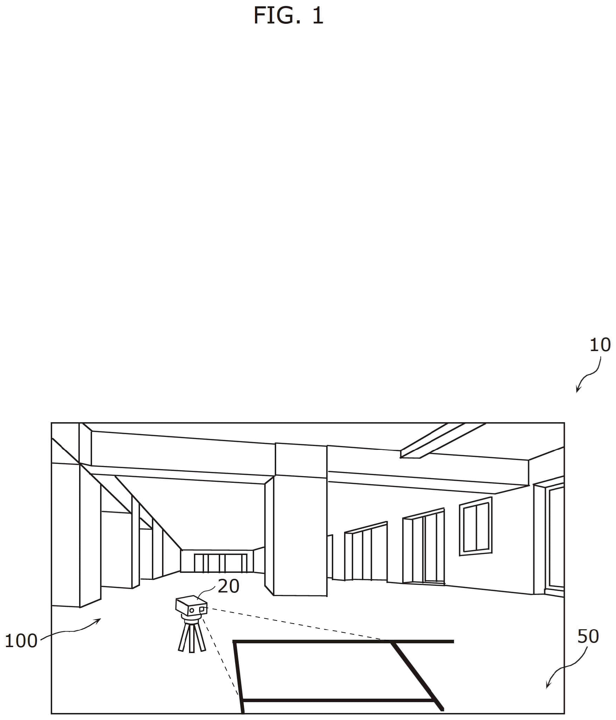

   FIG. 1 is a diagram illustrating an overview of operation performed by a projection system according to an embodiment.
[FIG. 2]

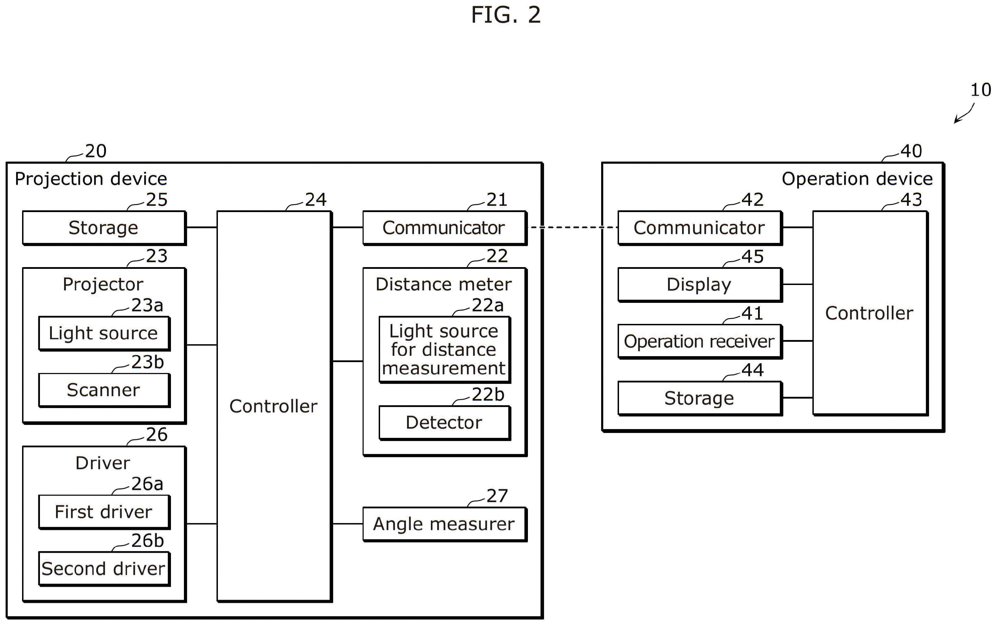

   FIG. 2 is a block diagram illustrating a functional configuration of the projection system according to the embodiment.
[FIG. 3]

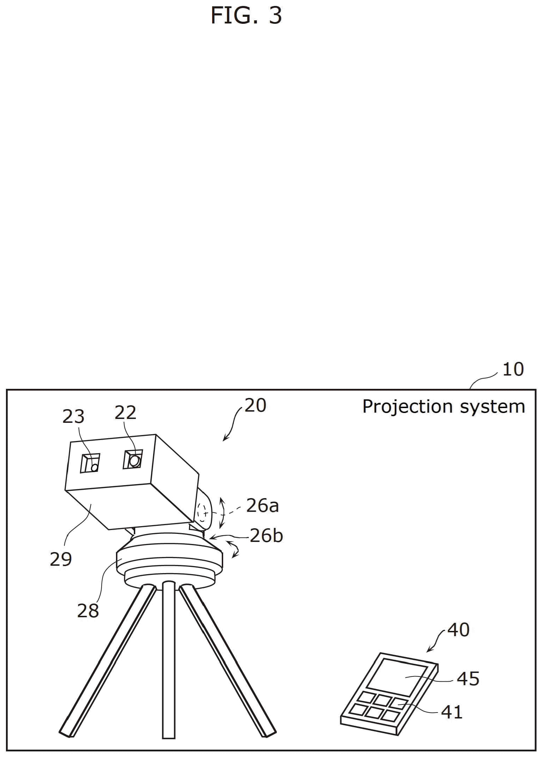

   FIG. 3 is a diagram illustrating external appearances of devices included in the projection system according to the embodiment.
[FIG. 4]

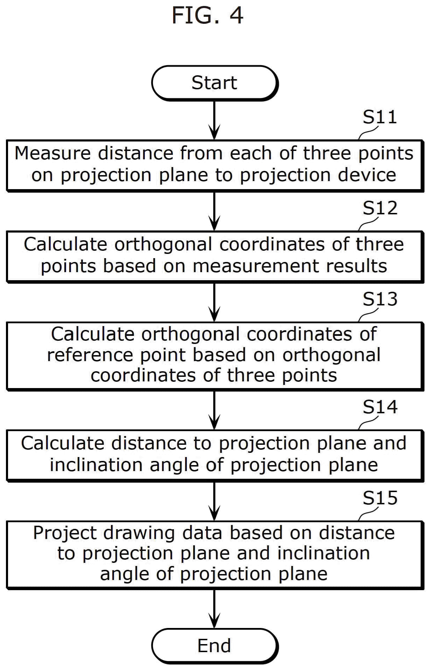

   FIG. 4 is a flowchart illustrating an example of operation performed by the projection system according to the embodiment.
[FIG. 5]

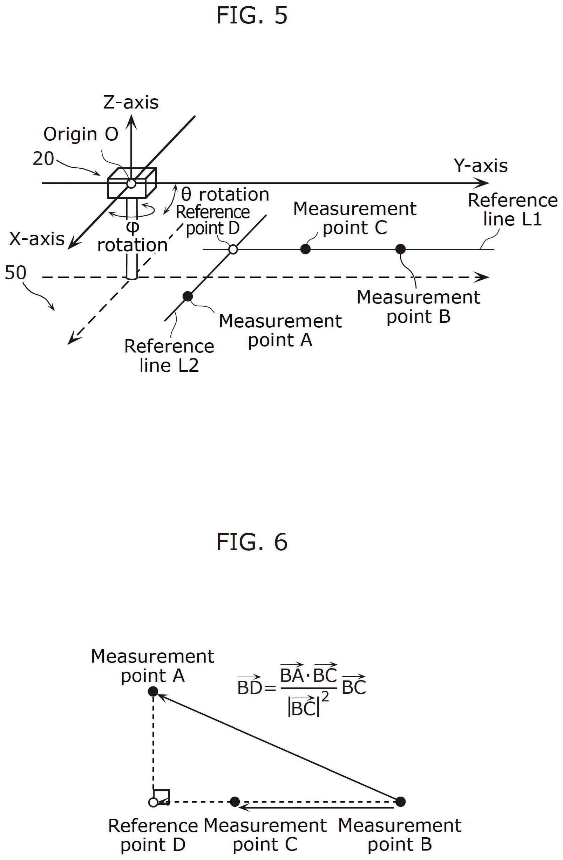

   FIG. 5 is a diagram illustrating coordinate axes of orthogonal coordinates in a space.
[FIG. 6]
   FIG. 6 is a diagram illustrating an equation for an orthogonal projection vector.
[FIG. 7]

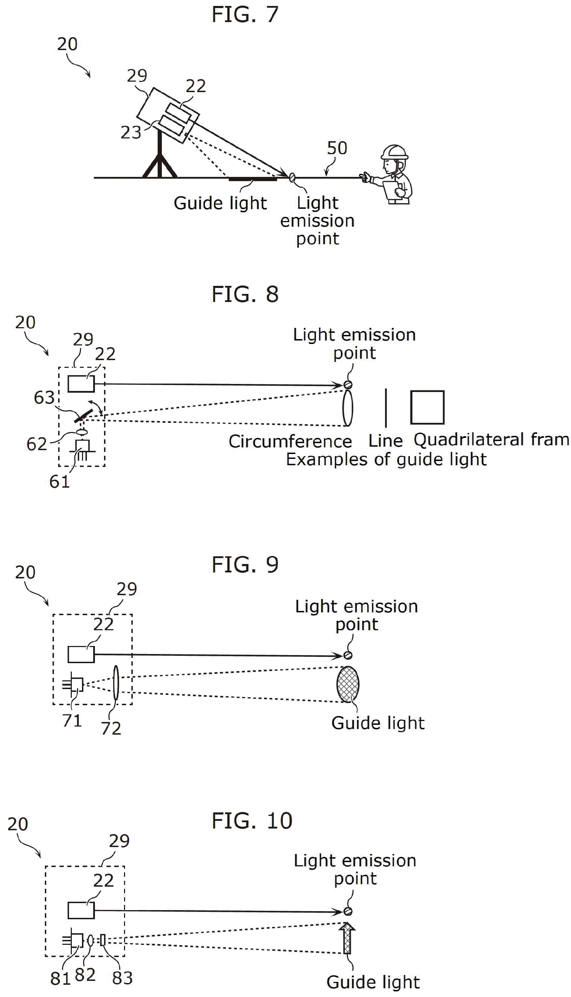

   FIG. 7 is a diagram illustrating an example of emitting guide light together with a light emission point.
[FIG. 8]
   FIG. 8 is a diagram illustrating configuration example 1 for guide light emission.
[FIG. 9]
   FIG. 9 is a diagram illustrating configuration example 2 for guide light emission.
[FIG. 10]
   FIG. 10 is a diagram illustrating configuration example 3 for guide light emission.

### [Description of Embodiments]

Hereinafter, embodiments are described in detail with reference to the drawings. Note that the embodiments below each describe a general or specific example. The numerical values, shapes, materials, elements, the arrangement and connection of the elements, steps, orders of the steps, etc. presented in the embodiments below are mere examples, and are not intended to limit the present invention. Furthermore, among the elements in the embodiments below, those not recited in any one of the independent claims will be described as optional elements.

Note that the drawings are schematic illustrations and are not necessarily precise depictions. Throughout the drawings, the same numeral is given to substantially the same element, and redundant description may be omitted or simplified.

### [Embodiment]

### [Overview]

First, an overview of a projection system according to an embodiment will be described. FIG. 1 is a diagram illustrating an overview of operation performed by a projection system according to the embodiment.

Projection system 10 according to the embodiment includes projection device 20. Projection device 20 is provided inside space 100 in a building under construction. Projection device 20 projects, in actual size, drawing data that is at least a part of architectural design data onto a structure (specifically, a floor, a wall, or a ceiling) creating space 100. Projecting in actual size means projecting the architectural design data onto a structure in the exact size specified by the data. Drawing data indicates, for example, marking positions in a space. Lines of light each having a length as designed are projected onto positions on which a user such as a worker for construction work is to draw marking lines.

With this, a user can readily draw marking lines by just tracing the projected lines of light. Note that it is not necessary to use lines of light as a guide to draw marking lines. Lines of light themselves may be used as marking lines.

Provided that projection system 10 can project a part or the whole of architectural design data, drawing data may be data other than data indicating a marking position. For example, when drawing data includes data indicating an installation position of equipment such as a built-in kitchen or a bathtub, projection system 10 may project the installation position of the equipment in actual size.

### [Configuration]

Next, a configuration of a projection device according to the embodiment will be described. FIG. 2 is a block diagram illustrating a functional configuration of projection system 10. FIG. 3 is a diagram illustrating external appearances of devices included in projection system 10. As illustrated in FIG. 2 and FIG. 3, projection system 10 includes projection device 20 and operation device 40. First, projection device 20 will be described.

Projection device 20 displays drawing data that is at least a part of architectural design data on a structure in actual size. The structure is specifically a floor, a wall, a ceiling, a pillar, or the like. Projection device 20 is, for example, mounted on a tripod and provided on a floor. Projection device 20 may be secured to a ceiling hanging bolt, or may be provided on a wall. Projection device 20 includes communicator 21, distance meter 22, projector 23, controller 24, storage 25, driver 26, angle measurer 27, attaching unit 28 (illustrated in FIG. 3), and casing 29 (illustrated in FIG. 3).

Communicator 21 is a communication circuit (in other words, a communication module) for projection device 20 to communicate with operation device 40. Communicator 21 performs wireless communication with operation device 40, but may perform wired communication with operation device 40. The communication standard used for the communication performed by communicator 21 is not particularly limited.

Distance meter 22 detects a distance from projection device 20 to a structure included in space 100. Distance meter 22 is, for example, a distance measurement sensor such as a time-of-flight (TOF) sensor. Distance meter 22 may be other distance measurement sensors, such as a distance measurement sensor using a phase difference detection method or a distance measurement sensor using a triangulation method. Distance meter 22 includes light source for distance measurement 22a and detector 22b.

Light source for distance measurement 22a emits light toward a structure. Light source for distance measurement 22a is implemented by, for example, a light-emitting element that emits infrared light, but may be implemented by a light-emitting element that emits visible light. As will be described later, distance meter 22 has a laser pointer function for presenting user with the current distance-measurement-target point. This function is achieved by, for example, a light source different from light source for distance measurement 22a, but when light source for distance measurement 22a emits visible light, the function may be achieved by light source for distance measurement 22a.

Moreover, light source for distance measurement 22a does not necessarily need to be separate from light source 23a included in projector 23, and light source 23a included in projector 23 may be used as light source for distance measurement 22a. In other words, distance meter 22 may be a sensor including only detector 22b, without light source for distance measurement 22a.

Detector 22b is a light receiving element that detects reflected light, which is light emitted by light source for distance measurement 22a and reflected off a structure. Detector 22b is implemented by a photodiode or the like.

Projector 23 is a projection module for projecting drawing data onto projection plane 50. Projector 23 includes light source 23a and scanner 23b. Note that, although not illustrated, projector 23 includes, apart from the above-described elements, optical components such as a lens, a mirror, etc.

Light source 23a is, for example, a laser light source implemented by a semiconductor light-emitting element. Note that light source 23a may include light emitting elements having different luminescent colors (e.g., a red-light emitting element, a green-light emitting element, and a blue-light emitting element), and may have a configuration capable of switching between the luminescent colors.

Scanner 23b scans, on a structure, light emitted by light source 23a. Scanner 23b is implemented by, for example, a micro-electromechanical systems (MEMS) mirror, but may be implemented by a galvanometer mirror.

Controller 24 is a control device that controls distance meter 22, projector 23, and driver 26 for projecting drawing data onto projection plane 50. Controller 24 is implemented by, for example, a microcomputer or a processor. Moreover, controller 24 may include a driving circuit for driving projector 23 and a driving circuit for driving driver 26. Functions of controller 24 are achieved by, for example, a processor, etc. included in controller 24 executing control programs stored in storage 25.

Storage 25 is a storage device that stores drawing data and control programs and the like executed by controller 24 for projecting the drawing data in actual size. Storage 25 is implemented by a semiconductor memory or the like.

Driver 26 is a driving mechanism for changing an orientation of projection device 20 (in other words, an orientation and an angle of distance meter 22). More specifically, driver 26 changes the orientation of casing 29 with respect to attaching unit 28. Driver 26 includes first driver 26a for changing an orientation of projection device 20 toward a tilt direction, and second driver 26b for changing an orientation of projection device 20 toward a pan direction. Each of first driver 26a and second driver 26b is implemented by a rotary driving device such as a motor. Note that driver 26 may include a third driver for changing the orientation of projection device 20 toward a roll direction. Moreover, driver 26 may be a mechanism having a ball-shaped joint.

Angle measurer 27 measures an orientation of projection device 20 (in other words, an orientation and an angle of distance meter 22). Specifically, angle measurer 27 is an angle sensor that measures a driving amount (i.e., a tilt angle and a pan angle) of driver 26. Note that when driver 26 includes a third driver for changing an orientation of projection device 20 toward a roll direction, angle measurer 27 may measure a roll angle as a driving amount of driver 26.

Attaching unit 28 is an attaching structure for attaching projection device 20 to a tripod. Note that projection device 20 may be attached to a ceiling hanging bolt. In this case, attaching unit 28 is an attaching structure for attaching projection device 20 to a ceiling.

Casing 29 accommodates communicator 21, distance meter 22, projector 23, controller 24, and storage 25. Casing 29 is made of, for example, resin, but may be made of metal.

Next, operation device 40 will be described. Operation device 40 is a remote controller for a user to remotely control projection device 20. Operation device 40 is, for example, a dedicated remote controller for projection device 20. Mobile terminals, such as a smartphone or a tablet terminal on which a dedicated application program is installed, may be used as operation device 40. Specifically, operation device 40 includes operation receiver 41, communicator 42, controller 43, storage 44, and display 45.

Operation receiver 41 is a user interface device that receives user operations. Operation receiver 41 is implemented by, for example, hardware buttons, but may be implemented by a touch panel or the like.

Communicator 42 is a communication circuit (in other words, a communication module) for operation device 40 to communicate with projection device 20. Communicator 42 performs wireless communication with projection device 20, but may perform wired communication with projection device 20. The communication standard used for the communication performed by communicator 42 is not particularly limited.

Controller 43 causes communicator 42 to transmit, to projection device 20, an instruction signal for causing projection device 20 to operate in accordance with an operation received by operation receiver 41. Controller 43 is implemented by, for example, a microcomputer or a processor. Functions of controller 43 are achieved by, for example, a processor, etc. included in controller 43 executing control programs stored in storage 44.

Storage 44 is a storage device that stores control programs executed by controller 43. Storage 44 is implemented by a semiconductor memory or the like. Storage 44 also stores architectural design data.

Architectural design data is three-dimensional data (more specifically, a three-dimensional computer-aided design (CAD) data) indicating the size and shape of space 100. The architectural design data also includes drawing data (two-dimensional data) indicating a floor plan of space 100, drawing data indicating marking positions, etc. Note that at least drawing data in architectural design data is also stored in storage 25 of projection device 20.

Display 45 displays a screen showing, for example, operation conditions of projection device 20. Display 45 is implemented by, for example, a liquid crystal panel or an organic electroluminescent (EL) panel.

### [Operation Example]

In order to accurately project drawing data, it is important to form an association between a position in the drawing data and a position in projection plane 50. An operation example of operation performed by projection system 10 including a process of forming such an association will be described. FIG. 4 is a flowchart illustrating an example of operation performed by projection system 10.

In the description of the operation example below, coordinate axes of orthogonal coordinates are set in space 100 as illustrated in FIG. 5. FIG. 5 is a diagram illustrating the coordinate axes of orthogonal coordinates in space 100. The coordinate axes shown in FIG. 5 are determined with origin O at the position of projection device 20 (more specifically, a predetermined position in the vicinity of distance meter 22 and projector 23 inside projection device 20).

Moreover, in the description of the operation example below, projection plane 50 is a floor surface, and two reference lines L1 and L2 are drawn on the floor surface. The two reference lines L1 and L2 are drawn by, for example, a user. The two references lines L1 and L2 are, for example, orthogonal to each other, and the position of the intersection point at which the two reference lines L1 and L2 intersect is reference point D. Reference point D is a point onto which a predetermined point in drawing data is to be projected. Note that positions of reference lines L1 and L2 are specified in drawing data. Accordingly, reference lines L1 and L2 can be utilized for forming an association between a position in the drawing data and a position in projection plane 50. Provided that the two reference lines L1 and L2 intersect with each other (not parallel with each other), it is not necessary for the two reference lines L1 and L2 to be orthogonal to each other.

First, a user provides projection device 20 in space 100, and measures a distance from each of three distance-measurement-target points (hereinafter, also referred to as measurement points) on projection plane 50 to projection device 20 (S11). Note that the user is to measure a distance from each of at least three distance-measurement-target points to projection device 20. The user may measure a distance from each of three or more distance-measurement-target points to projection device 20.

For example, distance meter 22 of projection device 20 uses a laser pointer to present the measurement points on projection plane 50 to the user. The user drives driver 26 to move the laser pointer over reference line L1 (or reference line L2), and performs, in the current state, a measurement instruction operation instructing measurement (storage) of the distance. With this, the distance from the measurement point to projection device 20 is stored in storage 25, together with the pan angle φ and the tilt angle θ at the time of the instruction of the measurement instruction operation. Note that the pan angle φ and the tilt angle θ are measured by angle measurer 27. By the user repeatedly performing such an operation for three times, distances r from the three mutually different measurement points on projection plane 50 to projection device 20, and pan angles φ and tilt angles θ at the times of measurements of distances r are stored in storage 25.

Next, controller 24 calculates orthogonal coordinates (xyz coordinates) of each of the three measurement points based on the stored information (i.e., results of the distance measurements) (S12). Distances r from the three measurement points to projection device 20 and pan angles φ and tilt angles θ at the times of measurements of distances r, which are stored in storage 25, represent polar coordinates of the three measurement points. Controller 24 can convert these polar coordinates into orthogonal coordinates (xyz coordinates) based on the following Expression 1.
[Math. 1] $\left(\begin{matrix}x \\ y \\ z\end{matrix}\right) = \left(\begin{matrix}r cos θ sin φ \\ r cos θ cos φ \\ r sin θ\end{matrix}\right)$ Expression 1

Next, controller 24 calculates the orthogonal coordinates of reference point D based on the orthogonal coordinates of the three measurement points (S13). When the three measurement points are denoted as measurement point A, measurement point B, and measurement point C as shown in FIG. 5, controller 24 can calculate the coordinates of reference point D based on an equation for an orthogonal projection vector shown in FIG. 6. FIG. 6 is a diagram illustrating an equation for an orthogonal projection vector. Note that, when one of measurement point A, measurement point B, or measurement point C is the same point as reference point D, a process of step S13 will be omitted.

Next, controller 24 calculates a distance from projection device 20 to projection plane 50 (i.e., a plane that passes through measurement point A, measurement point B, and measurement point C) and an inclination angle of projection plane 50 relative to projection device 20 (S14). The following Expression 2 (determinant) holds when an equation of projection plane 50 is expressed by ax + by + cz = d, where the coordinates of measurement point A is (xₐ, yₐ, zₐ), the coordinates of measurement point B is (x_{b}, y_{b}, z_{b}), and the coordinates of measurement point C is (x_{c}, y_{c}, z_{c}). Controller 24 calculates normal vector n = (a, b, c) of projection plane 50 by modifying Expression 2 like Expression 3. Normal vector n indicates the inclination angle of projection plane 50 in the orthogonal coordinates, and the length of normal vector n indicates the distance from projection device 20 to projection plane 50. In other words, the calculation of a normal vector is equivalent to the calculation of a distance from projection device 20 to projection plane 50 and an inclination angle of projection plane 50 relative to projection device 20. [Math. 2] $\begin{matrix}\left(\begin{matrix}{x}_{a} & {y}_{a} & {z}_{a} \\ {x}_{b} & {y}_{b} & {z}_{b} \\ {x}_{c} & {y}_{c} & {z}_{c}\end{matrix}\right) \left(\begin{matrix}a \\ b \\ c\end{matrix}\right) = \left(\begin{matrix}d \\ d \\ d\end{matrix}\right) Expression 2 \\ \left(\begin{matrix}a \\ b \\ c\end{matrix}\right) = {\left(\begin{matrix}{x}_{a} & {y}_{a} & {z}_{a} \\ {x}_{b} & {y}_{b} & {z}_{b} \\ {x}_{c} & {y}_{c} & {z}_{c}\end{matrix}\right)}^{- 1} \left(\begin{matrix}d \\ d \\ d\end{matrix}\right) Expression 3\end{matrix}$

Next, controller 24 causes projector 23 to project drawing data onto projection plane 50, based on the calculated distance from projection device 20 to projection plane 50 and the calculated inclination angle of projection plane 50 (S15). Specifically, controller 24 corrects distortion of the drawing data according to the calculated inclination angle of projection plane 50, and corrects a projection scaling factor for the drawing data based on the calculated distance to projection plane 50.

In addition, the drawing data includes position information of the reference lines. Controller 24 then causes projector 23 to project the corrected drawing data onto projection plane 50 such that reference lines L1 and L2 in the corrected drawing data overlap reference lines L1 and L2 of the projection plane and that a predetermined point of the corrected drawing data overlaps the calculated coordinates of reference point D (i.e., determination of projection position). With this, the drawing data is projected onto projection plane 50 in actual size.

As has been described, projection system 10 uses, as measurement points (points whose coordinates are identified), points on reference lines L1 and L2 of projection plane 50 which are specified in drawing data. Therefore, projection system 10 can readily form an association between a position in drawing data and a position in projection plane 50.

### [Configuration Example 1 for Guide Light Emission]

As described above, three measurement points are selected by a user using a laser pointer function of distance meter 22. However, since a light emission point formed on projection plane 50 using the laser pointer function of distance meter 22 is small about several mm, the position of a light emission point (i.e., a point to be selected by a user) on projection plane 50 is likely to be difficult to identify.

In view of the above, projection device 20 emits (projects), onto projection plane 50, a light emission point, together with guide light indicating the position of the light emission point to a user. FIG. 7 is a diagram illustrating an example of emitting guide light together with a light emission point.

In the example shown in FIG. 7, the guide light is emitted using projector 23. Hereinafter, configuration example 1 for guide light emission will be described with reference to FIG. 8. FIG. 8 is a diagram illustrating configuration example 1 for guide light emission.

As illustrated in FIG. 8, projection device 20 includes laser light source 61, lens 62 that collimates the laser light emitted by laser light source 61, and deflection mirror 63 that can deflect the collimated laser light. Laser light source 61 corresponds to light source 23a included in projector 23, and deflection mirror 63 corresponds to scanner 23b included in projector 23. In other words, laser light source 61 and deflection mirror 63 are included in projector 23.

Controller 24 can emit, onto projection plane 50, a linear guide light pattern by moving deflection mirror 63 while causing laser light source 61 to emit light (i.e., by scanning laser light using deflection mirror 63). Here, the linear shape means a curve or a straight line. More specifically, the guide light pattern is in the shape of a circumference, straight line, or a quadrilateral frame, but may be in the shape of another polygonal frame or the like, and is not particularly limited.

Here, controller 24 may project a guide light pattern in a linear shape (in the shape of a circumference, a quadrilateral frame, or the like) surrounding a light emission point onto projection plane 50. Note that, since the positional relationship between the light emission point and the guide light pattern on projection plane 50 changes depending on the distance from projection apparatus 20 to the light emission point (the projection plane), it may be difficult for the guide light pattern to always surround the light emission point regardless of how the distance from projection apparatus 20 to the light emission point changes. In view of the above, the guide light pattern may be designed to surround the light emission point when the distance from projection apparatus 20 to the light emission point is within a predetermined, frequently-used distance range (e.g., 1 m to 3 m).

Moreover, controller 24 may project, onto projection plane 50, a guide light pattern in a spot shape (a shape different from the above-described linear shape, in which light is also emitted onto a portion surrounded by the linear shape) that illuminates a wider range than the light emission point illuminates. Here, the spot shape may be in any shape, such as, to be more specific, a circle, an ellipse, or a polygon. Further, controller 24 may form the spotlight into any figure such as an arrow.

Projection device 20 can assist a user in identifying the position of a light emission point (distance measurement target point) by emitting guide light (guide light pattern) onto projection plane 50 based on configuration example 1. Configuration example 1 has the advantage of a high degree of freedom for the guide light pattern through the use of deflection mirror 63 (movable part).

### [Configuration Example 2 for Guide Light Emission]

In configuration example 1, an example in which guide light is emitted utilizing projector 23 has been described; however, projection device 20 may include a dedicated optical system (laser light source 61, lens 62, and deflection mirror 63) for emitting guide light. In other words, besides projector 23, projection device 20 may include laser light source 61, lens 62, and deflection mirror 63.

Moreover, when projection device 20 includes the dedicated optical system for emitting guide light, guide light may be emitted by the configuration different from projector 23. Hereinafter, configuration example 2 for guide light emission will be described with reference to FIG. 9. FIG. 9 is a diagram illustrating configuration example 2 of guide light emission.

As illustrated in FIG. 9, projection device 20 includes laser light source 71, and lens 72 that forms a guide light pattern on projection plane 50 by converting the laser light emitted by laser light source 71 into parallel light or divergent light. Note that laser light source 71 and lens 72 are accommodated in casing 29, and their orientation is changed by driver 26 in the same manner as distance meter 22.

Controller 24 causes laser light source 71 to emit light to form a guide light pattern on projection plane 50. Controller 24 projects, onto projection plane 50, a guide light pattern in a spot shape (a shape different from the above-described linear shape, in which light is also emitted onto a portion surrounded by the linear shape) that illuminates a wider range than the light emission point illuminates. Here, the spot shape is, specifically, a circular shape or an elliptical shape. Note that projection device 20 can also form the spot shape into any shape, such as a polygon, by including an aperture or the like that blocks a portion of the light emitted from lens 72 toward projection plane 50.

Projection device 20 can assist a user in identifying the position of a light emission point (distance measurement target point) by emitting guide light (guide light pattern) onto projection plane 50 based on configuration example 2. Since configuration example 2 does not require a deflection mirror (movable part), configuration example 2 has the advantage of being implemented at a lower cost than configuration example 1.

### [Configuration Example 3 for Guide Light Emission]

Hereinafter, configuration example 3 for guide light emission will be described with reference to FIG. 10. FIG. 10 is a diagram illustrating configuration example 3 for guide light emission.

As illustrated in FIG. 10, projection device 20 includes laser light source 81, lens 82 that collimates the laser light emitted by laser light source 81, and diffractive optical element 83 that diffracts the collimated light. Diffractive optical element 83 is, specifically, a diffraction grating. Note that laser light source 81 and diffractive optical element 83 are accommodated in casing 29, and their orientation is changed by driver 26 in the same manner as distance meter 22.

Controller 24 can form a guide light pattern on projection plane 50 by causing laser light source 81 to emit light. In configuration example 3, the guide light pattern takes a shape in accordance with the specifications of diffractive optical element 83. In other words, changing the specifications of diffractive optical element 83 allows the guide light pattern to take various shapes. In the same manner as configuration example 1, configuration example 3 can form guide light patterns such as a linear shape, a linear shape surrounding a light emission point, and a spot shape. Moreover, configuration example 3 may form the spot shape into any figure such as an arrow.

Projection device 20 can assist a user in identifying the position of a light emission point (distance measurement target point) by emitting guide light (guide light pattern) onto projection plane 50 based on configuration example 3. Since configuration example 3 does not require a deflection mirror (movable part), configuration example 3 has the advantage of being implemented at a lower cost than configuration example 1.

### [Advantageous Effects, etc.]

The inventions derived from the disclosure of the present description are, for example, as follows. Hereinafter, the inventions derived from the disclosure of the present description will be described together with advantageous effects and the like that can be obtained by the inventions.

Invention 1 is projection device 20 that includes: projector 23 that projects drawing data for a building onto projection plane 50 of the building under construction; distance meter 22 that measures a distance from each of three or more points on projection plane 50 to projection device 20, the three or more points being selected by a user and not aligned in a straight line; angle measurer 27 that measures an angle of distance meter 22 at a time of measurement of the distance; and controller 24 that causes projector 23 to project the drawing data onto a projection position on projection plane 50, the projection position being determined based on the distance measured and the angle of distance meter 22 at the time of the measurement of the distance. When the user selects each of the three or more points, controller 24 presents the user with a position of the point that the user intends to select by forming, on projection plane 50, a light emission point formed based on light emitted by distance meter 22, and emits, onto projection plane 50, guide light indicating a position of the light emission point to the user.

By emitting guide light, the above-described projection device 20 can assist a user in identifying a position on projection plane 50 to which the user intends to measure a distance.

Invention 2 is projection device 20 according to invention 1, in which controller 24 emits, onto projection plane 50, laser light as the guide light using laser light source 61, 71, or 81 and an optical element.

Since the above-described projection device 20 can emit guide light having relatively high luminance onto projection plane 50, a user can readily locate the guide light.

Invention 3 is projection device 20 according to invention 2, in which the optical element is deflection mirror 63 that is capable of deflecting the laser light emitted by laser light source 61, and controller 24 forms a pattern of the guide light on projection plane 50 by changing an angle of deflection mirror 63.

The above-described projection device 20 can form various guide light patterns through the use of deflection mirror 63 (movable part).

Invention 4 is projection device 20 according to invention 3, in which laser light source 61 and deflection mirror 63 are included in projector 23.

Since the above-described projection device 20 can emit guide light using projector 23, projection device 20 has the advantage of not requiring an additional element to emit guide light.

Invention 5 is projection device 20 according to invention 2, in which the optical element is diffractive optical element 83 that forms a pattern of the guide light on projection plane 50 by diffracting the laser light emitted by laser light source 81.

Without using deflection mirror 63, the above-described projection device 20 can emit guide light at a low cost. Moreover, projection device 20 can change the guide light pattern in accordance with the specifications of diffractive optical element 83.

Invention 6 is projection device 20 according to invention 2, in which the optical element is lens 72 that forms a pattern of the guide light on projection plane 50 by converting the laser light emitted by laser light source 71 into parallel light or divergent light.

Without using deflection mirror 63, the above-described projection device 20 can emit guide light at a low cost.

Invention 7 is projection device 20 according to any of inventions 1 to 5, in which a pattern of the guide light formed on projection plane 50 is a linear shape.

By emitting a linear guide light pattern, the above-described projection device 20 can assist a user in identifying a position on projection plane 50 to which the user intends to measure a distance.

Invention 8 is projection device 20 according to invention 7, in which the pattern of the guide light formed on projection plane 50 is the linear shape surrounding the light emission point.

Since the above-described projection device 20 can surround a light emission point with a guide light pattern, a user can readily locate the light emission point (the position on projection plane 50 to which the user intends to measure the distance).

Invention 9 is projection device 20 according to any of inventions 1 to 6, in which a pattern of the guide light formed on projection plane 50 is a spot shape that illuminates a wider range than the light emission point illuminates.

Since the above-described projection device 20 can illuminate a relatively wide range with guide light, a user can readily locate the guide light.

Invention 10 is projection system 10 that includes: projection device 20 according to any of inventions 1 to 9; and operation device 40 for the user to remotely operate projection device 20.

By emitting guide light, the above-described projection system 10 can assist a user in identifying a position on projection plane 50 to which the user intends to measure a distance.

Invention 11 is a projection method executed by projection device 20 in which drawing data for a building is projected onto a projection plane of the building under construction. The projection method includes: distance measurement step S11 of measuring a distance from each of three or more points on projection plane 50 to projection device 20 using distance meter 22 included in projection device 20, the three or more points being selected by a user and not aligned in a straight line; an angle measurement step of measuring an angle of distance meter 22 at a time of measurement of the distance; and projection step S15 of projecting the drawing data onto a projection position on projection plane 50, the projection position being determined based on the distance measured and the angle of distance meter 22 at the time of the measurement of the distance. In distance measurement step S11 of the measuring of the distance, when the user selects each of the three or more points, a position of the point that the user intends to select is presented to the user by forming a light emission point on projection plane 50, and guide light indicating a position of the light emission point to the user is emitted onto projection plane 50.

By emitting guide light, the above-described projection method can assist a user in identifying a position on projection plane 50 to which the user intends to measure a distance.

### [Other Embodiments]

The embodiment has been hereinbefore described, yet the present invention is not limited to the above-described embodiment.

For example, although a laser-scanning-type projection device has been described in the above-described embodiment, the present invention may be implemented by a projection device of another type. The projection device need only be able to project at least a part of architectural design data onto a projection plane in actual size.

Moreover, in the above-described embodiment, the projection system includes a projection device and an operation device. However, the projection system may be implemented as a single device. In addition, the projection system may be implemented as a client-server system. In this case, some of processes described as being performed by the projection device in the above-described embodiment will be performed by a server device.

Furthermore, the orders of processes described in the flowcharts according to the above-described embodiment are mere examples. The orders of the processes may be changed, and the processes may be performed in parallel.

Moreover, the method of communication performed between the devices in the above-described embodiment is not particularly limited. Wireless communication or wired communication may be performed between the devices. The combination of wireless communication and wired communication may be performed between the devices. When two devices perform communication in the above-described embodiment, a relay device, which is not illustrated, may be interposed between the two devices.

Moreover, in the above-described embodiment, each of elements may be implemented by executing a software program suitable for the element. Each element may be implemented as a result of a program execution unit, such as a central processing unit (CPU), processor or the like, loading and executing a software program stored in a storage medium such as a hard disk or a semiconductor memory.

In addition, each element may be implemented by a hardware product. For example, each element may be a circuit (or an integrated circuit). These circuits may constitute a single circuit as a whole or may be individual circuits. Moreover, these circuits may be general-purpose circuits or dedicated circuits.

Note that general or specific aspects of the present invention may be implemented by a system, a device, a method, an integrated circuit, a computer program, or a computer-readable recording medium such as a CD-ROM. The general or specific aspects of the present invention may also be implemented by any combination of a system, a device, a method, an integrated circuit, a computer program, and a recording medium.

For example, the present invention may be implemented by a program for causing a computer to execute the projection method. Alternatively, the present invention may be implemented as a non-transitory computer-readable recording medium on which such a program is recorded.

The present invention also encompasses: embodiments achieved by applying various modifications conceivable to those skilled in the art to each embodiment; and embodiments achieved by optionally combining the elements and the functions of each embodiment without departing from the spirit of the present invention.

### [Reference Signs List]

- 10: projection system
- 20: projection device
- 21, 42: communicator
- 22: distance meter
- 22a: light source for distance measurement
- 22b: detector
- 23: projector
- 23a: light source
- 23b: scanner
- 24, 43: controller
- 25, 44: storage
- 26: driver
- 26a: first driver
- 26b: second driver
- 27: angle measurer
- 28: attaching unit
- 29: casing
- 40: operation device
- 41: operation receiver
- 45: display
- 50: projection plane
- 61, 71, 81: laser light source
- 62, 72, 82: lens
- 63: deflection mirror
- 83: diffractive optical element
- 100: space

## Claims

1. A projection device comprising:
a projector that projects drawing data for a building onto a projection plane of the building under construction;
a distance meter that measures a distance from each of three or more points on the projection plane to the projection device, the three or more points being selected by a user and not aligned in a straight line;
an angle measurer that measures an angle of the distance meter at a time of measurement of the distance; and
a controller that causes the projector to project the drawing data onto a projection position on the projection plane, the projection position being determined based on the distance measured and the angle of the distance meter at the time of the measurement of the distance, wherein
when the user selects each of the three or more points, the controller presents the user with a position of the point that the user intends to select by forming, on the projection plane, a light emission point formed based on light emitted by the distance meter, and emits, onto the projection plane, guide light indicating a position of the light emission point to the user.

2. The projection device according to claim 1, wherein
the controller emits, onto the projection plane, laser light as the guide light using a laser light source and an optical element.

3. The projection device according to claim 2, wherein
the optical element is a mirror that is capable of deflecting the laser light emitted by the laser light source, and
the controller forms a pattern of the guide light on the projection plane by changing an angle of the mirror.

4. The projection device according to claim 3, wherein
the laser light source and the mirror are included in the projector.

5. The projection device according to claim 2, wherein
the optical element is a diffractive optical element that forms a pattern of the guide light on the projection plane by diffracting the laser light emitted by the laser light source.

6. The projection device according to claim 2, wherein
the optical element is a lens that forms a pattern of the guide light on the projection plane by converting the laser light emitted by the laser light source into parallel light or divergent light.

7. The projection device according to claim 1, wherein
a pattern of the guide light formed on the projection plane is a linear shape.

8. The projection device according to claim 7, wherein
the pattern of the guide light formed on the projection plane is the linear shape surrounding the light emission point.

9. The projection device according to claim 1, wherein
a pattern of the guide light formed on the projection plane is a spot shape that illuminates a wider range than the light emission point illuminates.

10. A projection system comprising:
the projection device according to any one of claims 1 to 9; and
an operation device for the user to remotely operate the projection device.

11. A projection method executed by a projection device wherein drawing data for a building is projected onto a projection plane of the building under construction, the projection method comprising:
measuring a distance from each of three or more points on the projection plane to the projection device using a distance meter included in the projection device, the three or more points being selected by a user and not aligned in a straight line;
measuring an angle of the distance meter at a time of measurement of the distance; and
projecting the drawing data onto a projection position on the projection plane, the projection position being determined based on the distance measured and the angle of the distance meter at the time of the measurement of the distance, wherein
in the measuring of the distance, when the user selects each of the three or more points, a position of the point that the user intends to select is presented to the user by forming a light emission point on the projection plane, and guide light indicating a position of the light emission point to the user is emitted onto the projection plane.
